(19) Europäisches Patentamt
European Patent Office
Office européen des brevets

(11) **EP 1 872 098 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(51) Int Cl.:
***G01G 15/00*** (2006.01)

(21) Anmeldenummer: **06722798.3**

(22) Anmeldetag: **19.04.2006**

(86) Internationale Anmeldenummer:
**PCT/DE2006/000679**

(87) Internationale Veröffentlichungsnummer:
**WO 2006/111142 (26.10.2006 Gazette 2006/43)**

(54) **VERPACKUNGSMASCHINE**

PACKAGING MACHINE

MACHINE D'EMBALLAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.04.2005 DE 102005018253**

(43) Veröffentlichungstag der Anmeldung:
**02.01.2008 Patentblatt 2008/01**

(73) Patentinhaber: **Multivac Sepp Haggenmüller GmbH & Co. KG**
**87787 Wolfertschwenden (DE)**

(72) Erfinder:
• **EHRMANN, Elmar, Eugen**
**87730 Bad Grönenbach (DE)**

• **SLOMP, Jan, Thieme**
**87730 Bad Grönenbach (DE)**
• **SCHULZKI, Alexander**
**67705 Stelzenberg (DE)**

(74) Vertreter: **Grünecker, Kinkeldey, Stockmair & Schwanhäusser**
**Leopoldstrasse 4**
**80802 München (DE)**

(56) Entgegenhaltungen:
**DE-A1- 3 830 692      DE-A1- 4 409 908**
**DE-A1- 10 232 136     DE-A1- 19 609 431**
**US-A1- 2004 000 436   US-B1- 6 455 002**
**US-B1- 6 769 228**

**Beschreibung**

Die Erfindung betrifft eine Wiegevorrichtung und ein Wiegeverfahren für eine Verpackungs- und/oder Etikettiermaschine nach den Oberbegriffen der Ansprüche 1 und 15.

Mit der DE 196 09 431 ist beispielsweise bereits ein Verfahren sowie eine Vorrichtung zum Wägen und Etikettieren von Packungen bekannt geworden. Bei dieser Vorrichtung werden einzelne Packungen über ein Wägeband geführt und während des Transports auf dem Wägeband gewogen. Über eine nachgeschaltete Etikettiereinheit wird die Ware anschließend etikettiert, wobei insbesondere die Gewichtsangabe aufgetragen wird. Derartige Vorrichtungen sind als separate Wiege- und Etikettiermaschinen im Handel erhältlich und werden üblicherweise an ein Austragband einer Verpackungsmaschine angefügt.

Diese Art von Wiegevorrichtung muss an das Format der zu wiegenden Packungen angepasst werden. Die größte vorgesehene Packung muss Platz auf dem Wägeband finden, so dass dieses entsprechend groß dimensioniert sein muss. Dies hat jedoch zur Folge, dass beim Wiegen kleiner Packungen die Bandgeschwindigkeit entsprechend hochgefahren werden muss, um einen ausreichenden Warendurchsatz zu gewährleisten. Zu hohe Transportgeschwindigkeiten bringen jedoch Probleme beim Wiegen sowie auch in der nachfolgenden Etikettiereinheit mit sich. Insbesondere sind die zugehörigen Etikettendrucker in der Regel in ihrer Geschwindigkeit limitiert.

Weiterhin muss für die Einzelwägung eine Vereinzelung der aus dem Austragband der Verpackungsmaschine kommenden Packungen vorgenommen werden, wodurch sich der Aufwand und auch der Platzbedarf vergrößert.

Aufgabe der Erfindung ist es demgegenüber eine Vorrichtung und ein Verfahren zum Wiegen vorzuschlagen, die platzsparend realisierbar sind und/oder die Bearbeitung von Packungen innerhalb einer großen Bandbreite im Format der Packungen ermöglichen.

Diese Aufgabe wird ausgehend von einer Vorrichtung und einem Verfahren der einleitend genannten Art durch die kennzeichnenden Merkmale der Ansprüche 1 und 15 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung sowie ein erfindungsgemäßes Verfahren gemäß den Oberbegriffen der Ansprüche 1 und 15 dadurch aus, dass eine Erfassung des Gewichts von zwei oder mehreren Packungen sowie des durch anschließende Zufuhr oder Abfuhr einer einzelnen Packung oder einer Anzahl gemeinsam zu wiegender Packungen veränderten Gewichts vorgesehen ist, wobei das Gewicht einer einzelnen Packung oder einer Anzahl gemeinsam zu wiegender Packungen aus der Differenz zwischen den so ermittelten Gewichten bestimmbar ist.

Hierzu wird eine erfindungsgemäße Vorrichtung vorzugsweise mit einer Waage versehen, die eine Wägeaufnahme für zwei oder mehrere Packungen aufweist. In einer besonderen Ausführungsform der Erfindung werden hierbei Mittel zur Zufuhr von zwei oder mehreren Packungen Stückgütern auf die Wägeaufnahme und zur gemeinsamen Wägung der zwei oder mehreren Packungen sowie Mittel zur sukzessiven Abfuhr einzelner zu wiegender Packungen oder zu wiegender Gruppen von Packungen mit anschließender Wägung des auf der Wägeaufnahme verbleibenden Gewichts vorgesehen. Dabei wird mittels einer Auswerteeinheit die Bestimmung des Gewichts einer Packung oder des Gruppengewichts einer Gruppe von Packungen aus der Differenz zweier Gewichtswerte vorgesehen.

In einer anderen Ausführungsform der Erfindung wird eine entsprechende Wiegevorrichtung so ausgebildet, dass Mittel zur sukzessiven Zufuhr von zwei oder mehreren Packungen auf die Wägeaufnahme mit sukzessiver Wägung des auf der Wägeaufnahme befindlichen Gewichts und Mittel zur anschließenden Abfuhr zweier oder mehrerer auf der Wägeaufnahme befindlicher Packungen vorgesehen sind. Auch bei dieser Ausführungsform kann eine Auswerteeinheit zur Bestimmung des Gewichts einer einzelnen Packung oder des Gruppengewichts einer Gruppe von Packungen aus der Differenz zweier Gewichtswerte vorgesehen werden.

In der ersten genannten Ausführungsform werden alle gemeinsam zu wiegenden Packungen auf die Wägeaufnahme zugeführt und anschließend sukzessive einzeln oder in Gruppen, je nach den zu erfassenden Gewichtswerten von der Wägeaufnahme entnommen. In der zweiten Ausführungsform hingegen werden sukzessive die zu wiegenden Packungen einzeln oder in Gruppen der Wägeaufnahme zugeführt, bis sich die maximale gemeinsam zu wiegende Anzahl von Packungen auf der Wägeaufnahme befindet. Die Abfuhr von der Wägeeinheit kann danach gleichzeitig oder nacheinander ohne Wiegevorgang komplett oder für eine Vielzahl der Packungen ohne weitere Wägung stattfinden.

In beiden Fällen wird zum einen die Bearbeitung von Packungen innerhalb einer großen Bandbreite hinsichtlich ihrer Größe möglich, d.h. es kann die volle Aufnahmekapazität der Wiegevorrichtung auch bei kleineren Packungen genutzt werden.

Zudem kann der Durchsatz vor allem von kleinen Packungen durch die erfindungsgemäßen Maßnahmen gegenüber einer Einzelwägung erhöht werden, da auch Wägungen mit zwei oder mehreren Packungen auf der Wägeaufnahme stattfinden können.

Weiterhin ist in beiden Fällen die Produktionslinie insgesamt weniger aufwändig. Im ersten Ausführungsbeispiel entfällt eine Vereinzelungsvorrichtung vor der Wiegevorrichtung, im zweiten Ausführungsbeispiel können unter Umständen etwaige nachgeschaltete Sortierungs- oder Gruppierungsvorrichtungen entfallen, da die Zuordnung der Packungen bereits auf der Wiegevorrichtung vorgenommen werden kann. Dabei ist in jedem Fall sowohl das Einzel- bzw. Gruppengewicht, als auch das Summengewicht erfassbar.

Durch die erfindungsgemäße Ausbildung der Wiegevorrichtung kann auch bei kleinerem Packungsformat eine größere Wiegeeinheit dadurch genutzt werden, dass mehrere Packungen gleichzeitig mit ihrem Summengewicht gewogen werden.

Vorteilhafterweise wird hierzu der Wiegebereich der Wiegeeinheit so groß ausgelegt, dass der Wiegebereich der Wiegevorrichtung größer oder gleich dem größten auftretenden Summengewicht der Packungen ist.

Die Gewichtsbestimmung der einzelnen Packungen bzw. einer bestimmten Anzahl gemeinsam zu wiegender Packungen kann in vorteilhafter Weise sodann dadurch erfolgen, dass die einzelnen Packungen oder die entsprechende Anzahl gemeinsam zu wiegender Packungen nacheinander der Wiegestation zu- oder abgeführt werden. Das zu bestimmende Gewicht ergibt sich dabei aus der Änderung des durch Abfuhr oder Zufuhr der zu wiegenden Packung oder Packungen veränderten Gewichts der auf der Wiegestation befindlichen Packungen. Diese Änderung kann durch Subtraktion zweier Gewichte, vorzugsweise zweier nacheinander erfasster Gewichte rechnerisch bestimmt werden.

Diese Vorgehensweise kann mehrfach wiederholt werden.

Vorteilhafterweise werden bei einer erfindungsgemäßen Verpackungsmaschine zwei oder mehrere Packungen gemeinsam der Wiegevorrichtung zugeführt, wobei von der Gesamtheit der auf oder in der Wiegevorrichtung befindlichen Packungen eine einzelne Packung oder eine Anzahl gemeinsam zu wiegender Packungen abgeführt werden. Durch anschließende Gewichtsermittlung der verbleibenden Packung bzw. Packungen kann das Einzelgewicht der abgeführten Packung bzw. das Gesamtgewicht der genannten Anzahl von Packungen anhand der durch die Abfuhr verursachten Gewichtsverminderung bestimmt werden. Diese Gewichtsverminderung wird vorzugsweise in einer Auswerteeinheit rechnerisch durch Subtraktion zweier aufeinanderfolgend erfasster Gewichtswerte bestimmt. Dabei wird jeweils das nach der Abfuhr der einzelnen zu wiegenden Packung oder, falls das Gewicht einer Anzahl von Packungen ermittelt werden soll, nach der Abfuhr der zu wiegenden Anzahl von Packungen ermittelte Summengewicht von dem davor ermittelten Summengewicht abgezogen.

Durch die gemeinsame Zufuhr zweier oder mehrerer Warenpackungen zur Wiegestation erübrigt sich eine Vereinzelungsvorrichtung vor der Wiegevorrichtung, wodurch sich ein kompakter Aufbau der Verpackungsmaschine gibt.

In einer besonders vorteilhaften Ausführungsform der Erfindung wird eine Gewichtserfassung während der Bewegung einer oder mehrerer Packungen vorgesehen.

Ein solches dynamisches Wiegeverfahren während der Bewegung der Packungen ermöglicht, wie oben angegeben, gegenüber einem getakteten Betrieb einen schnelleren Durchsatz, so dass die Integration der Wiegevorrichtung in die Verpackungsmaschine erleichtert wird. Im oben angeführten Ausführungsbeispiel wird demnach die Abfuhreinheit kontinuierlich betrieben, so dass die zu erfassenden Gewichte während des Transports und insbesondere während der Abfuhr der Packungen von der Wiegevorrichtung erfasst werden.

Die Abfuhreinheit kann dabei auch bei kleinen Packungen bei hohem Durchsatz (Durchsatz = Stück/Minute) mit moderater Geschwindigkeit betrieben werden, so dass geschwindigkeitsbedingte Störungen beim Wiegevorgang oder aber auch beim nachfolgenden Etikettiervorgang vermieden werden können.

Neben der oben angeführten dynamischen Gewichtserfassung kann auch eine Gewichtserfassung einer oder mehrerer Packungen im Stillstand vorgesehen sein. Das Wiegen im Stillstand stellt sicher, dass keine durch die Bewegung der Packungen verursachten Störungen beim Wiegevorgang auftreten können.

Dabei werden bevorzugt zuvor alle auf der Wiegevorrichtung befindlichen Packungen bewegt, wobei vorzugsweise die Bewegung horizontal gerichtet ist. Diese Maßnahme stellt ein Beispiel dafür dar, wie die Packungen sukzessive durch die Bewegung auf der Wiegevorrichtung ab und/oder zuzuführen sind.

In einer bevorzugten Ausführungsform wird die Wiegestation mit einem Wägeband versehen, das kontinuierlich oder diskontinuierlich umlaufend angetrieben wird. Die Umlaufgeschwindigkeit bei kontinuierlichen Betrieb bzw. die Taktgeschwindigkeit bei einem diskontinuierlichen Betrieb ist dabei so festzulegen, dass nach dem Verlassen der Packungen, deren Gewicht letztlich bestimmt werden soll, von dem Wägeband eine ausreichende Zeit für die nachfolgende Gewichtsbestimmung verbleibt.

Ein kontinuierlicher Bandbetrieb, bei dem die Packung bzw. die Packungen während der Transportbewegung gewogen werden, hat hierbei den zusätzlichen Vorteil, dass die Packungen keinen taktbedingten Beschleunigungs- oder Bremsvorgängen unterworfen sind, so dass dadurch hervorgerufene Probleme gleich gar nicht auftreten können und insbesondere auch die Position der Packungen auf dem Wägeband von solchen Vorgängen ungestört bleibt.

Vorzugsweise wird der Wiegevorrichtung eine Transporteinheit zum Abtransport der Packungen nachgeordnet.

Vorteilhafterweise wird dabei die Fördergeschwindigkeit der nachgeordneten Transporteinheit größer gewählt als die Fördergeschwindigkeit der Fördereinheit der Wiegevorrichtung. Hierdurch wird bei der Übergabe der Packungen von der Fördereinheit der Wiegevorrichtung zur nachgeordneten Transporteinheit eine Beschleunigung der Packungen durchgeführt, wodurch die Packungen schneller von der Wiegevorrichtung entnommen werden. Wird beispielsweise die Wiegevorrichtung mit einem Wägeband zur Förderung der Packungen versehen, das die Packungen auf ein nachgeordnetes Transportband übergibt, so werden die Packungen gewissermaßen durch das nachgeordnete, schneller laufende Transportband beschleunigt und dabei vom Wägeband schneller heruntergezogen.

Diese Ausführung bietet insbesondere beim dynamischen Wiegen Vorteile, da die Totzeit, d. h. die Zeit, die zur Entnahme der Packungen benötigt wird und in der nicht gewogen werden kann, durch diese Maßnahme verkürzt wird. Darüber hinaus findet durch diese Maßnahme eine Vereinzelung hinter der Wiegevorrichtung auf der nachgeordneten Transporteinheit statt, die gegebenenfalls vorteilhaft nutzbar ist.

Die Zufuhr und/oder die Abfuhr auf die Wägeaufnahme, insbesondere auf ein Wägeband wird vorzugsweise so durchgeführt, dass die Packungen bzw. die zu wiegenden Gruppen von Packungen hintereinanderliegend angeordnet sind.

Dies ermöglicht einen weitgehend kontinuierlichen Betrieb, insbesondere in Verbindung mit dem oben angeführten dynamischen Wiegeverfahren.

Die Fördereinheit der Wiegevorrichtung, insbesondere in Form eines Wägebandes kann aber auch mehrspurig ausgeführt werden, so dass auch Packungen, die in einer Reihe quer zur Transportrichtung nebeneinander liegend auf das Wägeband verbracht werden, einzeln nacheinander von dem Wägeband abgeführt werden können. Derartige Vorrichtungen sind beispielsweise durch mehrere nebeneinander umlaufende Bänder oder Riemen mit separat ansteuerbaren Antrieben realisierbar.

Die Steuerung der Wägestation ist an die Art der Zufuhr- und Abfuhr der Packungen anzupassen. Insbesondere ist darauf zu achten, dass die jeweilige Einheit, die einen oder mehrere steuerbare Antriebe umfassen können, wie o.a. derart angesteuert wird, dass die einzeln zu wiegenden Packungen oder die gewünschte Anzahl von gemeinsam zu wiegenden Packungen separat von der Wiegestation abführbar bzw. zuführbar sind, um das beschriebene Subtraktionswiegeverfahren nutzen zu können.

Der Wiegevorrichtung wird zur Erzielung der eingangs genannten Etikettierfunktion bei Bedarf eine Etikettiereinheit nachgeordnet. Der Warentransport zur bzw. durch die Etikettiereinheit wird hierbei über eine entsprechende Transporteinheit, z.B. über ein Transportband realisiert. Die Etikettiereinheit kann entweder über eine mit der Wiegeeinheit gemeinsame Steuereinheit oder aber über einen entsprechenden Daten- und Steuersignalaustausch zwischen verschiedenen, verdrahteten oder drahtlos kommunizierenden Steuereinheiten zum einen mit der Gewichtsinformation der auszuzeichnenden Packungen versorgt und zum anderen auf den Durchfluss der zu etikettierenden Packungen synchronisiert werden.

Einer erfindungsgemäßen Wiegeeinheit kann bei Bedarf auch eine Sortiereinheit nachgeordnet werden, falls Packungen gewichtsabhängig zu sortieren sind. Dies ist insbesondere dann von Vorteil, wenn die Ware an sich gleichgewichtig verpackt werden soll, jedoch vereinzelt Abweichungen auftreten. In diesem Fall können Packungen mit abweichenden Gewicht von den gleichgewichtigen Packungen durch Betätigung der Sortiervorrichtung ausgesondert werden.

Für das beschriebene Subtraktionswiegeverfahren ist es, wie o.a., von Bedeutung, die einzelnen Packungen bzw. die gewünschte Anzahl gemeinsam zu wiegender Packungen von der Wiegevorrichtung nacheinander abzuführen. Bei Verwendung eines kontinuierlich umlaufenden Wägebandes ergibt sich hierfür die Notwendigkeit eines vorgegebenen Abstandes zwischen einzelnen Packungen bzw. einzelnen Gruppen bestimmter Anzahl gemeinsam zu wiegender Packungen. Dieser vorgegebener Mindestabstand ist erforderlich, um nach dem Verlassen des Wägebandes eine ausreichende Wiegezeit für das nachfolgend zu bestimmende Gewicht vorzusehen, bevor die nächste Packung von Wägeband abgeführt wird. Darüber hinaus stellt ein solcher Mindestabstand sicher, dass sich die Packungen bei der Abfuhr vom Wägeband nicht gegenseitig behindern, wie dies beispielsweise bei aneinanderstoßenden oder teilweise aufeinanderliegenden Packungen möglich wäre.

Um die gewünschte Position der Packungen mit dem vorgegebenen Mindestabstand einzuhalten wird vorzugsweise die Zufuhreinheit entsprechend ausgebildet, die die Packungen in ihrer Gesamtheit der Wiegestation zuführt. Die Zuführeinheit kann hierzu beispielsweise mit mehreren Schubelementen versehen sein, wobei jedes Schubelement an einer einzelnen Packung angreift und diese auf die Wägevorrichtung schiebt. Durch entsprechenden Abstand der Schubelemente, der um das gewünschte Abstandsmaß größer als das Maß der Packung in Schubrichtung gewählt wird, ist sodann der gewünschte Mindestabstand zwischen den einzelnen Packungen einstellbar.

Die Flexibilität der Vorrichtung im Hinblick auf unterschiedliche Packungsformate kann dabei beispielsweise durch verstellbare oder austauschbare Schubelemente gewährleistet bleiben.

Zur Lösung des Positionierungsproblems auf dem Wägeband sind jedoch auch anderweitige Zufuhreinheiten denkbar, beispielsweise können Greifer oder Saugheber verwendet werden, die die Packungen in der gewünschten Position ablegen.

Eine erfindungsgemäße Wiegevorrichtung lässt sich besonders vorteilhaft in eine Verpackungsmaschine integrieren, da keine vorgeordnete Vereinzelungseinheit erforderlich ist. Eine erfindungsgemäße Wiegestation kann dabei problemlos im Takt einer Verpackungsmaschine mit der von der Verpackungsmaschine bereitgestellten Gesamtheit auszutragender Packungen beschickt werden, ohne dass aufwändige Puffer oder Vereinzelungseinheiten zwischengeschaltet werden müssen. Es muss lediglich die Arbeitsgeschwindigkeit der Wiegevorrichtung mit der Arbeitsgeschwindigkeit der Verpackungsmaschine bzw. deren letzter Bearbeitungsstation angepasst werden.

Dabei kann die Erfindung sowohl bei Maschinen eingesetzt werden, die einzelne Verpackungen versiegeln (sogenannte Traysealer) als auch bei sogenannten Tiefzieh- oder Rollenmaschinen, die in einem Formvorgang mehrere Packungen aus einem Flachmaterial zusammenhängend herstellen und die einzelnen Packungen erst nach der Versiegelung in einer Schneideeinheit voneinander trennen. Bei derartigen Maschinen wird häufig taktweise eine in Reihen und Spalten oder Spuren, also gewissermaßen als Matrix angeordnete Gesamtheit mehrerer Packungen für den Wiegevorgang bereitgestellt. Eine erfindungsgemäße Wiegevorrichtung kann eine solche Gesamtmatrix von in Reihen und Spuren angeordneten Packungen gemeinsam aufnehmen und anschließend durch vereinzelte Abfuhr wiegen. Auch die Zufuhr der Gesamtheit der Packungen einer Reihe oder einer Spur ist in solchen Anwendungen denkbar, wobei dann die verschiedenen Reihen oder Spuren nacheinander der Wiegevorrichtung zugeführt werden. Eine solche Wiegevorrichtung ist somit unmittelbar in die Austragstrecke einer Verpackungsmaschine integrierbar.

In einer besonderen Ausführungsform der Erfindung werden zudem ein oder mehrere weitere Kontrolleinheiten zur Kontrolle der mit der erfindungsgemäßen Verpackungsmaschine oder -anlage hergestellten Packungen vorgesehen. Derartige Kontrolleinheiten können der zusätzlichen Qualitätssicherung dienen. Solche Kontrolleinheiten können beispielsweise in Form eines Metalldetektors vorliegen, der der Kontrolle auf metallische Fremdkörper dient. Auch eine optische Kontrolle kann je nach Anwendungsfall sinnvoll sein, um die Packungen auf vollständige Beschriftung oder grundsätzlich auf das gewünschte Erscheinungsbild zu prüfen. Auch eine Leckstation kann als zusätzliche Kontrolleinheit vorgesehen werden.

Verschiedene Ausführungsbeispiele der Erfindung sind in der Zeichnung dargestellt und werden anhand der Figuren nachfolgend näher erläutert.

Im einzelnen zeigen

Figur 1      eine schematische Seitenansicht einer ersten Ausführungsform der Erfindung,

Figur 2      eine Draufsicht auf eine Ausführung gemäß Figur 1,

Figur 3      eine Seitenansicht einer zweiten Ausführungsform der Erfindung,

Figur 4      eine Draufsicht auf eine Ausführung gemäß Figur 3,

Figur 5      eine Draufsicht auf eine dritte Ausführungsform der Erfindung,

Figur 6      eine Draufsicht auf eine vierte Ausführungsform der Erfindung,

Figur 7      eine Draufsicht auf eine fünfte Ausführungsform der Erfindung und

Figur 8      eine Draufsicht auf eine sechste Ausführungsform der Erfindung.

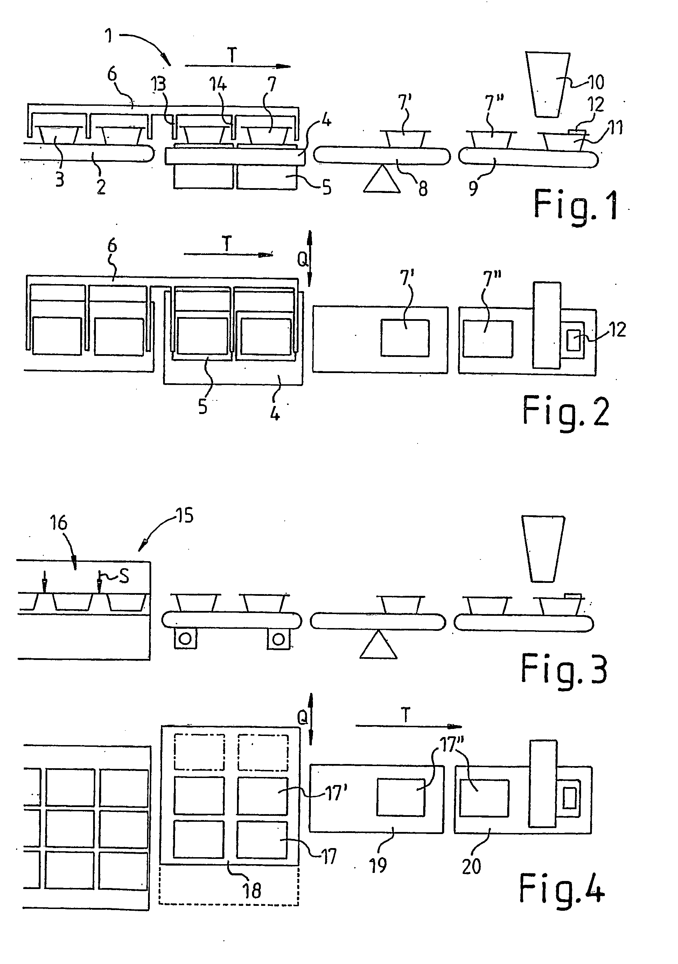

In der Seitenansicht von Figur 1 ist eine erfindungsgemäße Verpackungsmaschine 1 teilweise dargestellt. Zu erkennen ist das hintere Ende eines Füllbandes 2, in dem die zu verpackende Ware in einzelne Schalen 3, z.B. aus Kunststoff, eingefüllt wird.

In Transportrichtung T dem Füllband 2 nachgeordnet befindet sich eine in Richtung Q (vgl. Figur 2) quer verschiebbare Schalenaufnahme 4 mit einer Hubeinheit 5, um die Schalen 3 in die Schalenaufnahme 4 abzusenken bzw. aus der Schalenaufnahme 4 anzuheben.

Über dem hinteren Ende des Füllbandes 2 sowie der Schalenaufnahme 4 befindet sich eine Schubeinheit 6. Die Schubeinheit 6 ist in der Lage, gleichzeitig mehrere, im vorliegenden Fall zwei Schalen 7 von der Schalenaufnahme 4 auf ein nachgeordnetes Wägeband 8 und zwei Schalen 3 von dem Füllband 2 auf die Schalenaufnahme 4 zu verschieben.

Eine solche Anordnung ist beispielsweise bei manchen Maschinen (sogenannten Traysealern) bekannt, bei denen einzelne separate Schalen gefüllt und versiegelt werden. Die Schalenaufnahme 4 wird hierbei in Querrichtung Q mit den darin befindlichen Schalen 7 in eine nicht näher dargestellte Versiegelungsstation verschoben und anschließend nach der Versiegelung wieder in die dargestellte Position zum Abtransport der versiegelten Schalen 7 gebracht. Dabei können auch zwei gegenläufig bewegte Schalenaufnahmen 4 vorgesehen werden, um die Schalen einer Schalenaufnahme zu versiegeln, während die andere Schalenaufnahme geräumt und wieder beschickt wird.

Die Schubeinheit 6 verschiebt demnach im vorliegenden Ausführungsbeispiel als erfindungsgemäße Zufuhreinheit zwei versiegelte Schalen 7 gemeinsam auf das Wägeband 8.

Dem Wägeband 8 nachgeordnet ist ein Auszeichnungsband 9, über dem eine Etikettiereinheit 10 angeordnet ist. Die Etikettiereinheit 10 ist in der Lage, Etiketten auszudrucken und auf den zu etikettierenden Packungen 11 anzubringen. Ein solches Etikett 12 ist beispielhaft in den Figuren dargestellt.

Der Darstellung gemäß Figur 1 und 2 befindet sich nur noch eine Packung 7' auf dem Wägeband 8. Dies wird dadurch bewirkt, dass die Schalen 7', 7" sukzessive vom Wägeband 8 auf das Auszeichnungsband 9 weitergefördert werden.

Demzufolge befanden sich vor dem dargestellten Zustand die beiden Schalen 7', 7" gemeinsam auf dem Wägeband 8, auf das sie durch die Schubeinheit 6 geschoben wurden. Durch die Förderbewegung des Wägebandes 8 und des Auszeichnungsbandes 9 wurde die Schale 7'' bereits auf das Auszeichnungsband gefördert.

Die Gewichtsbestimmung der bereits vom Wägeband 8 abgeführten Schale 7'' wird eine Auswerteeinheit vorgesehen, die wie folgt arbeitet. Zunächst wurde das Summengewicht

$$G_{ges} = \sum_{i=1}^{n} G_i$$

wobei $G_{ges}$ das Summengewicht, $G_i$ das Gewicht der i-ten Schale und vorliegend $n = 2$ ist, beider Schalen 7' und 7'' ermittelt.

Hierzu ist der Wiegebereich des Wägebandes auf dieses Summengewicht anzupassen, d.h. $\geq G_{ges}$.

In dem dargestellten Zustand, nach dem Weitertransport der Schale 7'' auf das Auszeichnungsband 9 kann sodann das Einzelgewicht $G_1$ der nunmehr alleine auf dem Wägeband befindlichen Schale 7' ermittelt werden. Durch Subtraktion dieses Einzelgewichts von dem Gesamtgewicht

$$G_2 = G_{ges} - G_1$$

ist somit zugleich das Gewicht $G_2$ der zuvor abgeführten Schale 7'' bekannt, sodass diese von der Etikettiereinheit 10 mit der entsprechenden Gewichtsangabe versehen werden kann.

Sofern für das Gesamtgewicht mehr als zwei Schalen auf das Wägeband verbracht werden, so kann die Bestimmung des Einzelgewichts $G_n$ sukzessive in der vorbeschriebenen Weise vorgenommen werden, indem jeweils das Summengewicht ohne die einzeln abgeführten Packung von dem zuvor ermittelten Gewicht mit der zuletzt abgeführten Packung subtrahiert wird. Allgemein ergibt sich hieraus die Formel

$$G_n = \sum_{i=1}^{n} G_i - \sum_{i=1}^{n-1} G_i \, .$$

Das gleiche Verfahren kann auch für Gruppen mit einer bestimmten Anzahl von Packungen verwendet werden, falls lediglich das Summengewicht einer solchen Anzahl und nicht das Einzelgewicht der zugehörigen Packungen bestimmt werden soll.

Das so beschriebene Verfahren wird im Folgenden als Subtraktionsverfahren bezeichnet.

Die Schubeinheit 6 umfasst verschiedene Schubelemente 13, 14, die einen größeren Abstand aufweisen als das Außenmaß der Packungen 7 in Transportrichtung T. Beim Einsatz der Schubeinheit 6 kommen die Packungen 7 an den jeweiligen Schubelementen 13, 14 zum Anschlag, sodass sich dadurch auch ein definierter Abstand zwischen den Schalen 7', 7'' beim Transport auf das Wägeband 8 ergibt. Dieser Abstand sorgt dafür, dass die Schalen 7', 7'' ohne gegenseitige Störung einzeln vom Wägeband 8 abgeführt werden können und somit die beschriebenen Wiegevorgänge ermöglicht sind.

Die Ausführungsform gemäß Figur 3 entspricht einer Anordnung mit einer sogenannten Rollenmaschine oder Tiefziehmaschine zum Herstellen der zu wiegenden Packungen. Diese Verpackungsmaschine 15 stellt eine Vielzahl zusammenhängender Packungen her, die in einer Schneidstation 16 durch einen Schneidvorgang von einander separiert werden. Der Schneidvorgang ist durch die Pfeile S in Figur 3 angedeutet.

Bei einer solchen Verpackungsmaschine 15 werden demnach stets eine Vielzahl von Packungen 17 in einem Arbeitstakt bereitgestellt. Im vorliegenden Ausführungsbeispiel werden jeweils sechs Packungen 17 in zwei Reihen und drei Spuren bezogen auf die Transportrichtung bereitgestellt. Diese matrixartige Anordnung von den Packungen 17 wird zunächst auf ein Schiebeband 18 verbracht, das quer zur Transportrichtung T in Querrichtung Q verschiebbar ist. Das Schiebeband 18 umfasst Einzelbänder oder einzelne Riemen, um die einer Spur zugehörigen Packungen 17, 17', 17'' unabhängig von den Packungen der anderen Spuren in Transportrichtung T anzutreiben. Auf diese Weise können die Packungen 17, 17', 17'' jeweils einzeln auf ein nachgeordnetes Wägeband 19 gefördert werden, die durch entsprechende Querverschiebung in Richtung Q des Schiebebandes 18 vor dem Wägeband 19 platziert sind.

Zu dem in Figur 4 dargestellten Zeitpunkt wurden bereits zwei Packungen 17'' aus der ersten Spur vom Schiebeband 18 auf das Wägeband 19 verbracht. Anschließend wurde bereits eine Packung 17" auf das Auszeichnungsband 20 weitertransportiert. Darüberhinaus hat sich das Schiebeband 18 weiter in Querrichtung Q bewegt, so dass nunmehr die Packungen 17' der nächsten Spur zur Zufuhr auf das Wägeband 19 bereit stehen. Durch Wiederholung dieser Vorgänge können anschließend auch die Packungen 17 der letzten Spur dem Schiebeband 18 dem Wägeband 19 zugeführt werden.

Der Wiegevorgang selbst sowie das Etikettieren wird anschließend mit dem oben beschriebenen Subtraktionsverfahren vorgenommen.

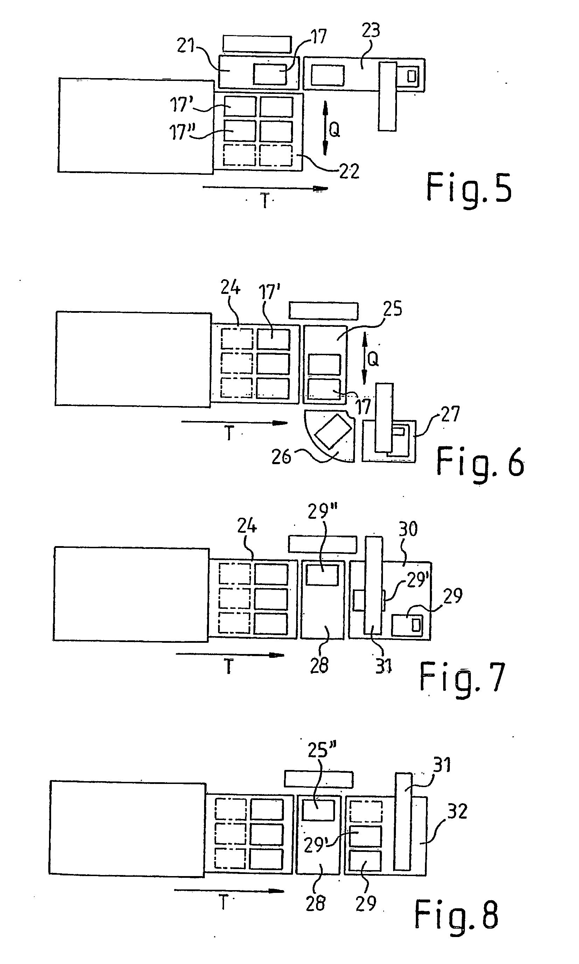

Die Ausführungsvariante gemäß Figur 5 entspricht im Wesentlichen dem vorgenannten Ausführungsbeispiel, wobei nunmehr jedoch das Wägeband 21 seitlich neben einem Austragband 22 angeordnet ist. Die Zufuhr auf das Wägeband 21 erfolgt nunmehr von dem in Transportrichtung T umlaufenden Austragband 22, von dem jeweils die Packungen 17, 17', 17'' einer Spur der in einem Arbeitstakt bereitgestellten Packungen dem Wägeband 21 in Querrichtung Q zugeführt werden. Hierzu kann eine in Querrichtung Q bewegliche, nicht näher dargestellte Schiebeeinrichtung vorgesehen werden. Der Wägevorgang auf dem Wägeband 21 sowie dem nachgeschaltetem Auszeichnungsband 23 wird wiederum in dem bereits vorgeschriebenen Subtraktionsverfahren durchgeführt.

Die Ausführungsvariante gemäß Figur 6 entspricht wiederum im Wesentlichen den beiden vorgenannten Ausführungsbeispielen, wobei nunmehr jedoch das Austragband 24 in Transportrichtung T umläuft und das Wägeband 25 in Querrichtung Q umlaufend hinter dem Austragband 24 angeordnet ist.

Bei dieser Ausführungsvariante werden durch Vorschub des Austragbandes 24 jeweils eine Reihe von Packungen 17, 17' gemeinsam dem Wägeband zugeführt. Im dargestellten Ausführungsbeispiel befinden sich somit zeitweise drei Packungen 17 auf dem Wägeband 25.

Die Abfuhr vom Wägeband 25 geschieht in Querrichtung Q auf ein Kurvenförderelement 26 mit nachgeschaltetem Auszeichnungsband 27.

Der Wiegevorgang selbst erfolgt wiederum im Subtraktionsverfahren. Zunächst werden alle drei auf dem Wägeband 25 befindlichen Packungen 17 gewogen und so das Gesamtwicht bestimmt. Nach Abfuhr der ersten Packung 17 auf das Kurvenförderelement 26 wird das Summengewicht der verbleibenden beiden Packungen 17 gewogen, wobei durch Subtraktion von dem zuvor ermittelten Gesamtgewicht das Einzelgewicht der bereits abgeführten Packung 17 ermittelt wird. Die beiden anschließend noch auf dem Wägeband 25 befindlichen Packungen 17 werden in der vorgeschriebenen Weise ebenfalls durch Ermittlung des Summengewichts und Subtraktion des anschließend ermittelten Gewichtswertes bestimmt.

Der Etikettiervorgang vollzieht sich in dieser Ausführung wie vorbeschrieben.

Das Ausführungsbeispiel gemäß Figur 7 zeigt eine im Hinblick auf das Austragband 24 und das Wägeband 28 vergleichbare Anordnung. Das Wägeband 28 ist jedoch nunmehr für einen mehrspurigen Antrieb ausgelegt, d.h. es umfasst mindestens drei nebeneinander umlaufende Bänder oder Riemen, sodass die Packungen 29, 29', 29'' einer Reihe sukzessive vom Wägeband 28 auf das Auszeichnungsband abgeführt werden können. Die Etikettiereinheit 31 ist dabei ebenfalls mehrspurig ausgelegt, sodass jede durchlaufende Packung 29, 29', 29'' mit der entsprechenden Gewichtsangabe versehen werden kann.

Der Wiegevorgang selbst erfolgt wiederum durch das oben beschriebene Subtraktionsverfahren, in dem jeweils das Einzelgewicht einer abgeführten Packung durch Subtraktion des verbleibenden Summengewichts vom zuvor ermittelten Gesamtgewicht ermittelt wird.

Die Ausführungsform gemäß Figur 8 entspricht im Wesentlichen der Ausführung gemäß Figur 7, wobei nunmehr das Auszeichnungsband 31 getaktet betrieben wird. Das Auszeichnungsband 31 steht somit still, bis alle Packungen 29, 29', 29'' einer Reihe auf das Auszeichnungsband 31 vom Wägeband 28 abgeführt ist. Anschließend werden in einem gemeinsamen Durchlauf unter der mehrspurigen Etikettiereinheit 31 alle Packungen 29, 29', 29'' gleichzeitig auf dem Aufzeichnungsband etikettiert.

Die dargestellten Ausführungsbeispiele zeigen verschiedene Möglichkeiten für Einsatz erfindungsgemäßer Wiegevorrichtungen in Verpackungsmaschinen. Allen Ausführungsbeispielen gemeinsam ist der Umstand, dass die Zufuhreinheit zur gemeinsamen Zufuhr von zwei oder mehreren Packungen zur Wiegeeinheit und die Abfuhreinheit zur Abfuhr einzelner Packungen oder einzelner Gruppen von gemeinsam zu wiegenden Packungen ausgebildet ist, wobei eine Gewichtsbestimmung der gemeinsam zugeführten Packungen vorgesehen ist.

Bezugszeichenliste:

| 1 | Verpackungsmaschine |
|---|---|
| 2 | Füllband |
| 3 | Schale |
| 4 | Schalenaufnahme |
| 5 | Hubeinheit |
| 6 | Schubeinheit |
| 7 | Schale |
| 8 | Wägeband |
| 9 | Auszeichnungsband |
| 10 | Etikettiereinheit |
| 11 | etikettierte Packung |
| 12 | Etikett |
| 13 | Schubelement |
| 14 | Schubelement |
| 15 | Verpackungsmaschine |
| 16 | Schneidstation |
| 17 | Packung |
| 18 | Schiebeband |
| 19 | Wägeband |
| 20 | Auszeichnungsband |
| 21 | Wägeband |
| 22 | Austragband |
| 23 | Auszeichnungsband |
| 24 | Austragband |
| 25 | Wägeband |
| 26 | Kurvenförderelement |
| 27 | Auszeichnungsband |
| 28 | Wägeband |
| 29 | Packung |
| 30 | Auszeichnungsband |
| 31 | Etikettiereinheit |
| 32 | Auszeichnungsband |

**Patentansprüche**

1. Verpackungsmaschine (1) mit einer Wiegevorrichtung (8), wobei eine Zufuhreinheit (6) zur Zufuhr von Packgut enthaltenden Packungen (7, 7') zur Wiegevorrichtung (8) und eine Abfuhreinheit zur Abfuhr der Packungen vorgesehen ist, wobei die Wiegevorrichtung (8) zu einer Erfassung des Gewichts von zwei oder mehreren Packungen (7', 7") sowie des durch anschließende Zufuhr oder Abfuhr einer einzelnen Packung (7') oder einer Anzahl gemeinsam zu wiegender Packungen veränderten Gewichts ausgebildet ist, wobei ferner eine Etikettiervorrichtung (10) vorgesehen ist,
   **dadurch gekennzeichnet, dass** eine Auswerteeinheit vorgesehen und dazu eingerichtet ist, das Gewicht einer einzelnen Packung (7") oder einer Anzahl gemeinsam zu wiegender Packungen aus der Differenz zwischen den so ermittelten Gewichten zu bestimmen, und dass die Zufuhreinheit (6) zur Wiegevorrichtung (8) zugleich als Abfuhreinheit aus einer Bearbeitungsstation der Verpackungsmaschine (1) vorgesehen ist.

2. Verpackungsmaschine nach Anspruch 1, **dadurch gekennzeichnet, dass** der Wiegebereich der Wiegevorrichtung (8) größer oder gleich dem größten vorgesehenen Summengewicht der Packungen (7', 7") ist.

3. Verpackungsmaschine nach einem der vorgenannten Ansprüche, **dadurch gekennzeichnet, dass** die Auswerteeinheit zur Subtraktion zweier Gewichtswerte vorgesehen ist.

4. Verpackungsmaschine nach einem der vorgenannten Ansprüche, **dadurch gekennzeichnet, dass** eine Subtraktion zweier aufeinander folgend erfasster Gewichtswerte vorgesehen ist.

5. Verpackungsmaschine nach einem der vorgenannten Ansprüche, **dadurch gekennzeichnet, dass** eine Gewichtserfassung während der Bewegung einer oder mehrerer Packungen (7, 7', 7") vorgesehen ist.

6. Verpackungsmaschine nach einem der Ansprüche 1 bis 4, **dadurch gekennzeichnet, dass** eine Gewichtserfassung einer oder mehrerer Packungen im Stillstand vorgesehen ist.

7. Verpackungsmaschine nach Anspruch 6, **dadurch gekennzeichnet, dass** eine Gewichtserfassung einer oder mehrerer Packungen im Stillstand vorgesehen ist, wobei vorher eine Bewegung aller auf der Wiegevorrichtung befindlichen Packungen stattgefunden hat.

8. Verpackungsmaschine nach einem der vorgenannten Ansprüche, **dadurch gekennzeichnet, dass** ein Wägeband (8) vorgesehen ist.

9. Verpackungsmaschine nach Anspruch 8, **dadurch gekennzeichnet, dass** eine Steuereinheit für das Wägeband (8) vorgesehen ist, die zur Förderung bzw. zur Abfuhr einzelner Packungen (7', 7") oder einer Anzahl gemeinsam zu wiegender Packungen ausgebildet ist.

10. Verpackungsmaschine nach einem der Ansprüche 8 oder 9, **dadurch gekennzeichnet, dass** dem Wägeband (8) ein Transportband (23) nachgeordnet und/oder vorgelagert ist.

11. Verpackungsmaschine nach einem der vorgeriannten Ansprüche, **dadurch gekennzeichnet, dass** die Zufuhreinheit (6) Mittel zur Beabstandung einzelner Packungen (7', 7") oder einzelner Gruppen bestimmter Anzahl von Packungen aufweist.

12. Verpackungsmaschine nach einem der vorgenannten Ansprüche, **dadurch gekennzeichnet, dass** die Zufuhreinheit eine Schubeinrichtung (6) umfasst.

13. Verpackungsmaschine nach Anspruch 12, **dadurch gekennzeichnet, dass** die Schubeinrichtung (6) zwei oder mehrere Schubelemente (13, 14) umfasst.

14. Vorrichtung nach Anspruch 13, **dadurch gekennzeichnet, dass** die Schubelemente (13, 14) einen größeren Abstand aufweisen als das Außenmaß der zu wiegenden Packungen (7, 7', 7") in Schubrichtung (T).

15. Verfahren zum Wiegen von Packungen, die von einer Verpackungsmaschine (1) bereitgestellt werden, wobei mit einer Wiegevorrichtung (8) eine Erfassung des Gewichts von zwei oder mehreren Packungen (7', 7") sowie des durch anschließende Zufuhr oder Abfuhr einer einzelnen Packung (7") oder einer Anzahl gemeinsam zu wiegender Packungen veränderten Gewichts vorgenommen wird, wobei die Packungen mittels einer Etikettiervorrichtung (10) etikettiert werden, wobei eine Gewichtsinformation auf die Packungen (7, 7', 7") aufgebracht wird, **dadurch gekennzeichnet,**
   **dass** das Gewicht einer einzelnen Packung (7', 7") oder einer Anzahl gemeinsam zu wiegender Packungen aus der Differenz zwischen den so ermittelten Gewichten bestimmt wird, wobei eine Zufuhreinheit (6) zur Wiegevorrichtung (8) zugleich als Abfuhreinheit aus einer Bearbeitungsstation der Verpackungsmaschine (1) vorgesehen ist.

## Claims

1. Packaging machine (1) with a weighing device (8), a feeding unit (6) being provided for supplying the weighing device (8) with packages (7, 7') containing packaged product, and a discharge unit for discharging the packages, and the weighing device (8) is configured to detect the weight of two or more packages (7', 7") and the change in weight caused by the subsequent supply or discharge of an individual package (7') or a number of packages to be weighed jointly, and a labelling device (10) is also provided, **characterised in that** an evaluation unit is provided and is set up so as to determine the weight of an individual package (7") or of a number of packages to be weighed jointly from the difference between the weights determined in this manner, and the feeding unit (6) for supplying the weighing device (8) is simultaneously configured as a discharge unit from a processing station of the packaging machine (1).

2. Packaging machine as claimed in claim 1, **characterised in that** the weighing range of the weighing device (8) is greater than or equal to the highest intended total weight of the packages (7', 7").

3. Packaging machine as claimed in one of the preceding claims, **characterised in that** the evaluation unit is configured to perform a subtraction of two weight values.

4. Packaging machine as claimed in one of the preceding claims, **characterised in that** a subtraction of two successively detected weight values is performed.

5. Packaging machine as claimed in one of the preceding claims, **characterised in that** weight detection takes place during the movement of one or more packages (7, 7', 7").

6. Packaging machine as claimed in one of claims 1 to 4, **characterised in that** weight detection takes place when one or more packages are stationary.

7. Packaging machine as claimed in claim 6, **characterised in that** weight detection takes place when one or more packages are stationary, a movement of all the packages disposed on the weighing device having taken place beforehand.

8. Packaging machine as claimed in one of the preceding claims, **characterised in that** a weighing belt (8) is provided.

9. Packaging machine as claimed in claim 8, **characterised in that** a control unit for the weighing belt (8) is provided, which is configured to convey and discharge individual packages (7', 7") or a number of packages to be weighed jointly.

10. Packaging machine as claimed in one of claims 8 or 9, **characterised in that** a conveyor belt (23) is disposed downstream and/or upstream of the weighing belt (8).

11. Packaging machine as claimed in one of the preceding claims, **characterised in that** the feeding unit (6) has means for spacing individual packages (7', 7") or individual groups of a specific number of packages apart.

12. Packaging machine as claimed in one of the preceding claims, **characterised in that** the feeding unit comprises a pushing device (6).

13. Packaging machine as claimed in claim 12, **characterised in that** the pushing device (6) comprises two or more pushing elements (13, 14).

14. Device as claimed in claim 13, **characterised in that** the pushing elements (13, 14) are spaced at a distance greater than the external dimension of the packages (7, 7', 7") to be weighed in the pushing direction (T).

15. Method of weighing packages positioned in readiness by a packaging machine (1), whereby the weight of two or more packages (7', 7") and the change in weight caused by the subsequent supply or discharge of an individual package (7") or a number of packages to be weighed jointly is detected by a weighing device (8), and the packages are labelled by a labelling device (10), and information pertaining to the weight is applied to the packages (7, 7', 7"),
**characterised in that**
the weight of an individual package (7', 7") or a number of packages to be weighed jointly is determined from the difference between the weights determined in this manner, and a feeding unit (6) supplying the weighing device (8) is simultaneously configured as a discharge unit from a processing station of the packaging machine (1).

## Revendications

1. Machine d'emballage (1) comprenant un dispositif de pesée (8),
dans laquelle il est prévu une unité d'amenée (6) pour amener des emballages (7, 7') renfermant un produit à emballer au dispositif de pesée (8), et une unité d'évacuation pour évacuer les emballages,
dans laquelle le dispositif de pesée (8) est conçu pour effectuer un relevé du poids de deux ou plusieurs emballages (7', 7''), ainsi que du poids modifié par l'amenée ou l'évacuation, qui suivent, d'un emballage individuel (7') ou d'un certain nombre d'emballages à peser en commun,

dans laquelle est par ailleurs prévu un dispositif d'étiquetage (10),

**caractérisée en ce qu'**il est prévu une unité d'exploitation et d'analyse conçue pour déterminer le poids d'un emballage individuel (7'') ou d'un certain nombre d'emballages à peser en commun, à partir de la différence entre les poids ayant été ainsi établis, et **en ce que** l'unité d'amenée (6) au dispositif de pesée (8) est en même temps prévue en tant qu'unité d'évacuation d'un poste de traitement de la machine d'emballage (1).

2. Machine d'emballage selon la revendication 1, **caractérisée en ce que** la plage de pesée du dispositif de pesée (8) est supérieure ou égale à la somme de poids la plus grande prévue, des emballages (7', 7'').

3. Machine d'emballage selon l'une des revendications précédentes, **caractérisée en ce que** l'unité d'exploitation et d'analyse est prévue pour effectuer la soustraction de deux valeurs de poids.

4. Machine d'emballage selon l'une des revendications précédentes, **caractérisée en ce qu'**il est prévu une soustraction de deux valeurs de poids relevées de manière successive.

5. Machine d'emballage selon l'une des revendications précédentes, **caractérisée en ce qu'**il est prévu un relevé de poids pendant le mouvement d'un ou de plusieurs emballages (7, 7', 7'').

6. Machine d'emballage selon l'une des revendications 1 à 4, **caractérisée en ce qu'**il est prévu un relevé de poids d'un ou de plusieurs emballages à l'arrêt.

7. Machine d'emballage selon la revendication 6, **caractérisée en ce qu'**il est prévu un relevé de poids d'un ou de plusieurs emballages à l'arrêt, un mouvement de tous les emballages, qui se trouvent sur le dispositif de pesée, ayant eu lieu auparavant.

8. Machine d'emballage selon l'une des revendications précédentes, **caractérisée en ce qu'**il est prévu une bande de pesage (8).

9. Machine d'emballage selon la revendication 8, **caractérisée en ce qu'**il est prévu une unité de commande pour la bande de pesage (8), qui est conçue pour le transport et l'évacuation d'emballages individuels (7', 7'') ou d'un certain nombre d'emballages à peser en commun.

10. Machine d'emballage selon l'une des revendications 8 ou 9, **caractérisée en ce qu'**une bande de transport (23) est agencée après la bande de pesage (8) et/ou précède celle-ci.

11. Machine d'emballage selon l'une des revendications précédentes, **caractérisée en ce que** l'unité d'amenée (6) comprend des moyens pour espacer des emballages individuels (7', 7'') ou des groupes individuels d'un certain nombre d'emballages.

12. Machine d'emballage selon l'une des revendications précédentes, **caractérisée en ce que** l'unité d'amenée comprend un dispositif de poussée (6).

13. Machine d'emballage selon la revendication 12, **caractérisée en ce que** le dispositif de poussée (6) comprend deux ou plusieurs éléments de poussée (13, 14).

14. Machine d'emballage selon la revendication 13, **caractérisée en ce que** les éléments de poussée (13, 14) présentent une distance d'espacement réciproque plus grande que la dimension extérieure des emballages (7, 7', 7'') à peser, dans la direction de poussée (T).

15. Procédé pour peser des emballages qui sont fournis par une machine d'emballage (1),

d'après lequel on effectue, à l'aide d'un dispositif de pesée (8), un relevé du poids de deux ou plusieurs emballages (7', 7''), ainsi que du poids modifié par l'amenée ou l'évacuation, qui suivent, d'un emballage individuel (7'') ou d'un certain nombre d'emballages à peser en commun,

d'après lequel les emballages sont étiquetés au moyen d'un dispositif d'étiquetage (10),

d'après lequel on applique une information de poids sur les emballages (7, 7', 7''),

**caractérisé**

**en ce que** l'on détermine le poids d'un emballage individuel (7', 7'') ou d'un certain nombre d'emballages à peser en commun, à partir de la différence entre les poids ayant été ainsi établis, une unité d'amenée (6) au dispositif de pesée (8) étant en même temps prévue en tant qu'unité d'évacuation d'un poste de traitement de la machine d'emballage (1).

Fig.1

Fig.2

Fig.3

Fig.4

Fig.5

Fig.6

Fig.7

Fig.8

**IN DER BESCHREIBUNG AUFGEFÜHRTE DOKUMENTE**

**In der Beschreibung aufgeführte Patentdokumente**

- DE 19609431